# EUROPEAN PATENT SPECIFICATION

(11) **EP 2 340 907 B1**
(45) Date of publication and mention of the grant of the patent: **23.11.2016**
(21) Application number: 10178112.8
(22) Date of filing: 21.09.2010
(51) Int. Cl.: B23H 7/06, B23H 7/10

(54) **Wire break repairing device for wire-cut electric discharge machine**
Drahtunterbrechungsreparaturvorrichtung für eine drahtgeschnittene elektrische Entladungsmaschine
Dispositif de réparation de fils cassés pour machine à décharge électrique à coupe-pâte

(30) Priority: 04.01.2010 JP 2010000078
(43) Date of publication of application: 06.07.2011
(73) Proprietor: FANUC CORPORATION, Oshino-mura Minamitsuru-gun Yamanashi 401-0597 (JP)
(72) Inventor: Kouda, Hisanori, Minamitsuru-gun Yamanashi 401-0597 (JP); Yamane, Hikaru, Minamitsuru-gun Yamanashi 401-0597 (JP)
(74) Representative: Ward, James Norman

(56) References cited:
- EP-A1- 0 770 444
- JP-A- 6 047 626

## Description

### BACKGROUND OF THE INVENTION

### 1. Field of the Invention

The present invention relates to a wire break repairing device for repairing a wire electrode broken during machining in a wire-cut electric discharge machine.

### 2. Description of the Related Art

When a wire electrode is broken during electric discharge machining of a workpiece by a wire-cut electric discharge machine, the tip of the wire electrode on the supply side is partially cut off and removed, then the wire electrode is automatically connected in one of the following methods and then the electric discharge machining is resumed:
(1) The wire electrode is returned to a machining start hole and automatically connected there, then retraces the machining route to the point of break of the wire electrode, and electric discharge machining is resumed at the point of break;
(2) The wire electrode is automatically connected at an intermediate point between the point of break of the wire electrode and the starting point of the block in which the wire electrode broke, and then electric discharge machining is resumed; or
(3) The wire electrode is automatically connected at the point of break of the wire electrode or at a point on the machining locus a short distance backward from the point of break of the wire electrode, and then electric discharge machining is resumed.

Japanese Patent Application Laid-Open No. 2-145215 discloses the method (3) described above in which the wire electrode is automatically connected at the point of break of the wire electrode or at a point on the machining locus a short distance backward from the point of break of the wire electrode, and then electric discharge machining is resumed. Japanese Patent Application Laid-Open No. 8-309622 discloses the method (2) described above in which the wire electrode is automatically connected at an intermediate point between the point of break of the wire electrode and the starting point of the block in which the wire electrode broke, and then electric discharge machining is resumed.

In an automatic wire connection process in the wire-cut electric discharge machine, the wire electrode is constrained by a flow of machining liquid ejected from the nozzle on an upper wire guide and is guided through a machined groove in the workpiece being machined and then into a lower wire guide, or otherwise the wire electrode is constrained by a flow of machining liquid absorbed through the nozzle on the lower wire guide and is guided into the lower wire guide. It is desirable, therefore, that, at the point where the wire electrode is connected, the surroundings of the wire electrode provide uniform conditions to the machining liquid.

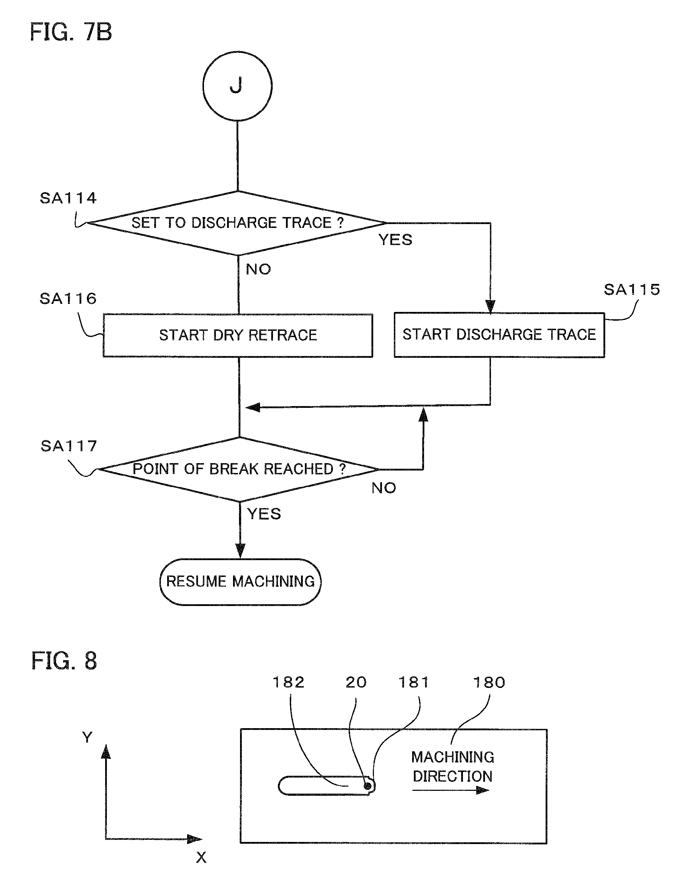

Suppose that the wire electrode 20 breaks at an electric discharge machining point 181 on the machining route (direction of X axis) in the workpiece 180 as shown in FIG. 8. Since there is no machined groove 182 in the direction of travel of the wire electrode 20 at the point of break, the wire electrode 20 is surrounded by the cut surfaces of the workpiece 180 on the front, right, and left sides, except on the back side. The surroundings of the wire electrode 20 at the point of its break, accordingly, do not provide uniform conditions to the flow of machining liquid.

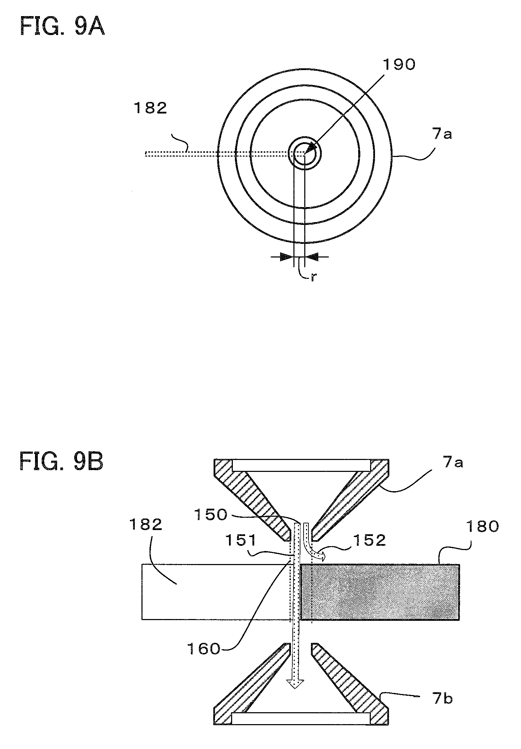

FIGs. 9A and 9B illustrate an automatic wire connection of the wire electrode performed at the point of break of the wire electrode.

At the point of break 190 of the wire electrode 20, the machining liquid ejected from the nozzle of the upper wire electrode guide 7 flows asymmetrically before and behind the wire electrode 20 as viewed in the machining direction, because the machined groove 182 is formed behind the wire electrode 20 and not formed in front of the wire electrode 20. In FIG. 9B, reference numeral 151 denotes the flow of machining liquid behind the wire electrode 20 (not shown), and reference numeral 152 denotes the flow of machining liquid in front of the wire electrode 20 (not shown).

If the machining liquid is ejected from the nozzle 7a of the upper wire electrode guide 7 at the point of break 190 of the wire electrode 20, the flow of machining liquid is disturbed as shown in FIG. 9B. Part of the flow of machining liquid 151 reaches the lower nozzle 7b without being blocked by the workpiece 180, while the remaining flow of machining liquid 152 is blocked by the workpiece 180 and cannot pass through the machined groove 182, so the wire electrode 20 can hardly be guided to the lower wire electrode guide 18.

The method (1) for preventing the flow of machining liquid from being disturbed has a problem that it takes a long time before resuming electric discharge machining after the wire electrode 20 breaks, resulting in a lower productivity. If the distance between the point of break 190 of the wire electrode 20 and the starting point of the block in which the wire electrode 20 broke is long, the method (2) has a problem that it takes a long time before resuming electric discharge machining after the wire electrode 20 breaks, resulting in a lower productivity as with method (1). The method (3) causes the flow of machining liquid to be blocked by the workpiece 180 as shown in FIG. 9B, resulting in a low success rate of connection of the wire electrode 20.

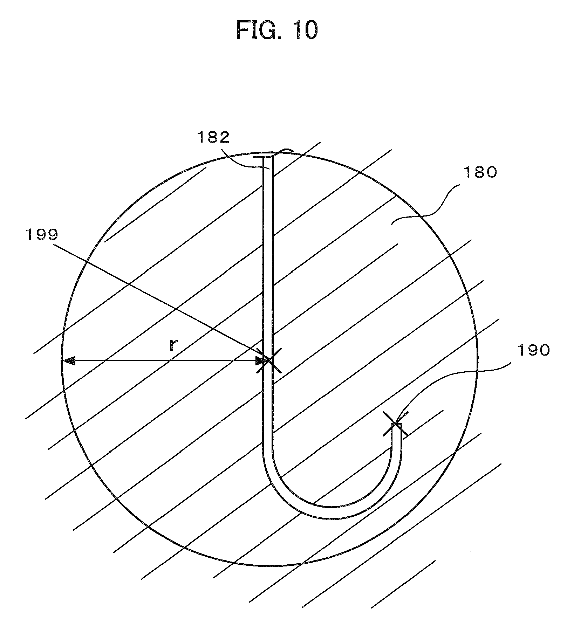

If the wire electrode 20 is connected at a point 199 a certain distance backward along the machining locus (machined groove 182) from the point of break 190 of the wire electrode 20 as shown in FIG. 10, the returned distance (straight-line distance between the point of break 190 and the connection point 199) may become shorter depending on the shape of the groove machined in the workpiece 180. In this case, since the point of break 190 is located within a virtual cylinder having a cross-sectional shape corresponding to the nozzle aperture of the upper nozzle 7a attached to the upper wire electrode guide 7 from which the machining liquid is ejected (the center of the nozzle aperture corresponds to the connection point 199), the machining liquid flows asymmetrically around the wire electrode 20 as in the case in FIG. 9, resulting in a lower success rate of connection of the wire electrode 20.

The technique disclosed in the aforementioned Japanese Patent Application Laid-Open No. 2-145215 has a drawback that, even if the returned distance is set to a value equal to or greater than the radius r of the aperture of the nozzle, the point of break of the wire electrode 20 may remain inside the virtual cylinder having a cross-sectional shape corresponding to the nozzle aperture and the flow of machining liquid may be disturbed, resulting in a lower success rate of automatic wire connection. On the other hand, the technique disclosed in the aforementioned Japanese Patent Application Laid-Open No. 8-309622 ,which discloses in combination the features of the preamble of claim 1, has a drawback that, if the distance between the point of break of the wire electrode 20 and the starting point of the block in which the wire electrode 20 breaks is long, it takes a long time before resuming electric discharge machining.

### SUMMARY OF THE INVENTION

In view of the above problems with the prior art techniques, an object of the present invention is to provide a wire break repairing method for a wire-cut electric discharge machine that can move a wire electrode to the most recently machined one, from among points of intersection at which the machining route intersects a circle with a radius centered at the point of break of the wire electrode, and automatically connect the wire electrode at the most recently machined point of intersection.

A wire break repairing method according to the invention is provided in claim 1. Preferred features are provided in the dependent claims.

### BRIEF DESCRIPTION OF THE DRAWINGS

FIG. 1 shows main components of a wire-cut electric discharge machine equipped with a wire break repairing device according to the present invention
FIG. 2 shows a wire-cut electric discharge machine controller that also serves as an NC unit (numerical control unit) for positional control of the table surface;
FIGs. 3A and 3B illustrate automatic wire connection of a wire electrode performed at a point at least a radius of a nozzle aperture backward from the point of break of the wire electrode;
FIG. 4 illustrates automatic wire connection of a wire electrode performed at the point of intersection closest to the point of break of the wire electrode, from among the points of intersection at which the machining route intersects a circle with a first radius R (i.e., radius of the nozzle aperture) centered at the point of break of the wire electrode, after the wire electrode is moved along the machining route to the closest point of intersection;
FIG. 5 illustrates that, in a wire-cut electric discharge machine having a retry function, the wire electrode is moved to a point of intersection machined earlier than the current point, from among the points of intersection at which the machining route intersects a circle with a second radius R' centered at the current point;
FIGs. 6A-6C illustrate different patterns for moving the wire electrode from the point of break of the wire electrode to an automatic wire connection point;
FIGs. 7A and 7B are flowcharts illustrating an algorithm executed by the wire break repairing device according to the present invention for repairing the broken wire electrode;
FIG. 8 is a plan view illustrating how a workpiece is machined by a wire electrode;
FIGs. 9A and 9B illustrate an automatic wire connection operation performed at the point of break of the wire electrode; and
FIG. 10 illustrates that the returned distance of the wire electrode may become shorter depending on the shape of the workpiece when automatic wire connection is performed at a point a certain distance backward along the machining locus from the point of break of the wire electrode.

### DETAILED DESCRIPTION OF THE PREFERRED EMBODIMENTS

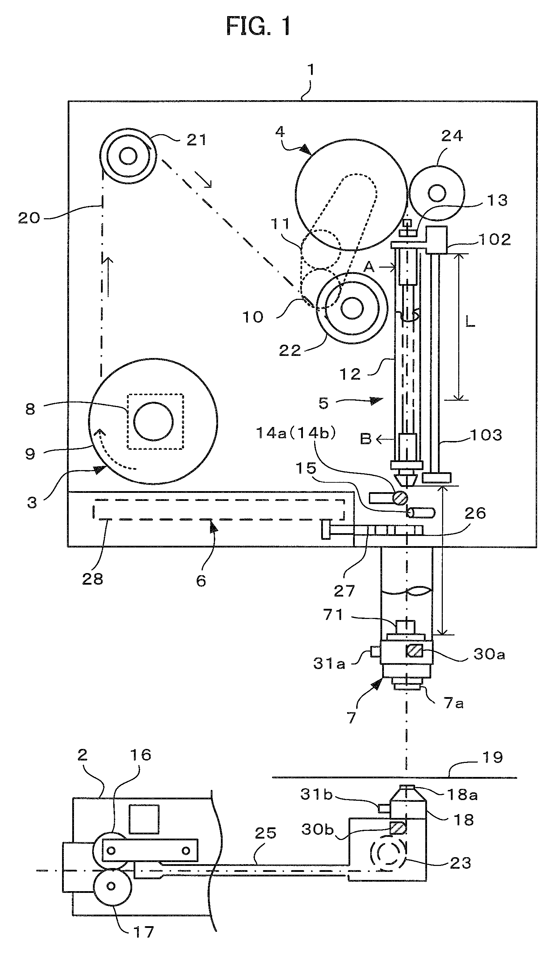

FIG. 1 shows main components of a wire-cut electric discharge machine equipped with a wire break repairing device according to the present invention.

The main body of the wire-cut electric discharge machine includes upper and lower machine frames 1 and 2 disposed facing each other. The upper and lower machine frames 1, 2 are attached so as to be vertically movable with respect to each other along a column (not shown), because the distance between an upper wire guide 7 upstream on a wire electrode feeding route and a lower wire electrode guide 18 downstream on the wire electrode feeding route should be adjusted depending on the thickness of the workpiece to be machined or other conditions.

In the upper machine frame 1, a wire electrode wind-up unit 3, brake roller 4, wire electrode fusing mechanism 5, wire electrode lead-in unit 6, and upper wire electrode guide 7 are disposed. The upper wire electrode guide 7 has a nozzle for ejecting a machining liquid onto a machining area.

The wire electrode wind-up unit 3 includes a supply reel 9 connected to a wind-up motor 8. The brake roller 4 is driven by a brake motor 10 that is rotatable in the forward and reverse directions, via a timing belt, powder clutch, and other components. The amount of rotation of the brake roller 4 (amount of movement of the wire electrode) is detected by an encoder 11.

The wire electrode fusing mechanism 5 includes a wire electrode feeding pipe structure 12 disposed above the upper wire electrode guide 7, first wire electrode fusing electrode 13 and second wire electrode fusing electrode (means for actually fusing the wire electrode) 14b disposed respectively on the entrance and exit sides of the wire electrode feeding pipe structure 12, and a pressure roller 15. The second wire electrode fusing electrode 14b also serves as a wire electrode tip detecting means 14a. The second wire electrode fusing electrode 14b and pressure roller 15 can move toward or away from the travelling path of the wire electrode 20. More specifically, when the second wire electrode fusing electrode 14b and the pressure roller 15 are used as the wire electrode fusing means or wire electrode tip detecting means, the second wire electrode fusing electrode 14b and pressure roller 15 are moved within a long hole by a solenoid (not shown) with a controlled current supply so as to enter the travelling path of the wire electrode 20 as shown in FIG. 1; they are positioned away from the wire electrode 20 during normal machining operations.

In this embodiment, annealing of the wire electrode 20 is carried out by supplying an electric current to the wire electrode 20 between the first and second wire electrode fusing electrodes 13 and 14b to heat the electrode 20, while flowing cooling air through the wire electrode feeding pipe structure 12 between arrows A and B in FIG. 1, thereby rapidly heating and fusing the wire electrode 20 at the point facing the second wire electrode fusing electrode 14b where the cooling air does not flow.

Within the upper wire electrode guide 7, an upper machining electrode 30a is disposed facing a wire electrode passage. For electric discharge machining, a machining current is applied between the upper and lower machining electrodes 30a and 30b.

In the lower machine frame 2, a wire electrode take-up roller 17, a pinch roller 16 associated therewith, and lower wire electrode guide 18 are disposed. A nozzle for ejecting the machining liquid is provided on the lower wire electrode guide 18. Reference numeral 19 denotes the table surface of the wire-cut electric discharge machine. The lower machining electrode 30b is disposed facing the wire electrode passage within the lower wire electrode guide 18. Reference characters 31a, 31b denote intake ports for taking in the machining liquid to be ejected from the nozzles attached to the upper and lower wire electrode guides 7, 18 onto the machining area.

The wire electrode 20 pulled out of the supply reel 9 is guided by deflector rollers 21, 22 toward the brake roller 4, passes near the first wire electrode fusing electrode 13, then through the wire electrode feeding pipe structure 12, reaches the upper wire electrode guide 7, then passes through the lower wire electrode guide 18, is redirected by a deflector roller 23, and runs along a wire electrode route to the wire electrode take-up roller 17.

The wire electrode 20 is given a predetermined back tension by the brake roller 4 driven by a brake motor 10 controlled by a constant current circuit (not shown) and runs by a traction operation of the wire electrode take-up roller 17. The lower machining electrode 30b disposed within the lower wire electrode guide 18 and the upper machining electrode 30a are brought into contact with the running wire electrode 20 to supply a machining power to the wire electrode 20.

During normal running of the wire electrode 20 (during electric discharge machining), the wind-up motor 8 of the supply reel 9 is running idle in the reverse direction (direction indicated by the dashed arrow). The grip 26 is open and does not touch the wire electrode 20 during normal running of the wire electrode 20. A pinch roller 24 ensures that the wire electrode 20 is kept in contact with the outer perimeter of the brake roller 4.

The wire electrode 20 passes through a guide pipe 25 disposed between the deflector roller 23 and the wire electrode take-up roller 17 in the lower machine frame 2.

The wire electrode lead-in unit 6 includes an arm 27 equipped with the grip 26 on an end thereof and an air cylinder 28 for drawing in the arm 27. The grip 26 disposed at the end of the arm 27 is located downstream of the pressure roller 15. The wire electrode lead-in unit 6 serves as a wire electrode removing means.

The wire electrode feeding pipe structure 12 has a water inlet port (not shown) at the point indicated by arrow A and a water outlet port (not shown) at the point indicated by arrow B. The wire electrode 20 is fused at the point corresponding to the second wire electrode fusing electrode 14b while carrying out annealing between arrows A and B as described above.

The entire wire electrode feeding pipe structure 12 is electrically insulated from the wire electrode 20. The wire electrode feeding pipe structure 12 is supported, together with the first wire electrode fusing electrode 13, by a sliding member 102. The sliding member 102 is elevated and lowered along the support guide 103 between the uppermost position shown in FIG. 1 and the positioning unit 71 formed on the upper wire electrode guide 7 by a driving means (not shown) (the elevating/lowering distance of the sliding member 102 is indicated by L in FIG. 1). The elevating/lowering mechanism of the sliding member 102 is used when automatic wire connection is performed.

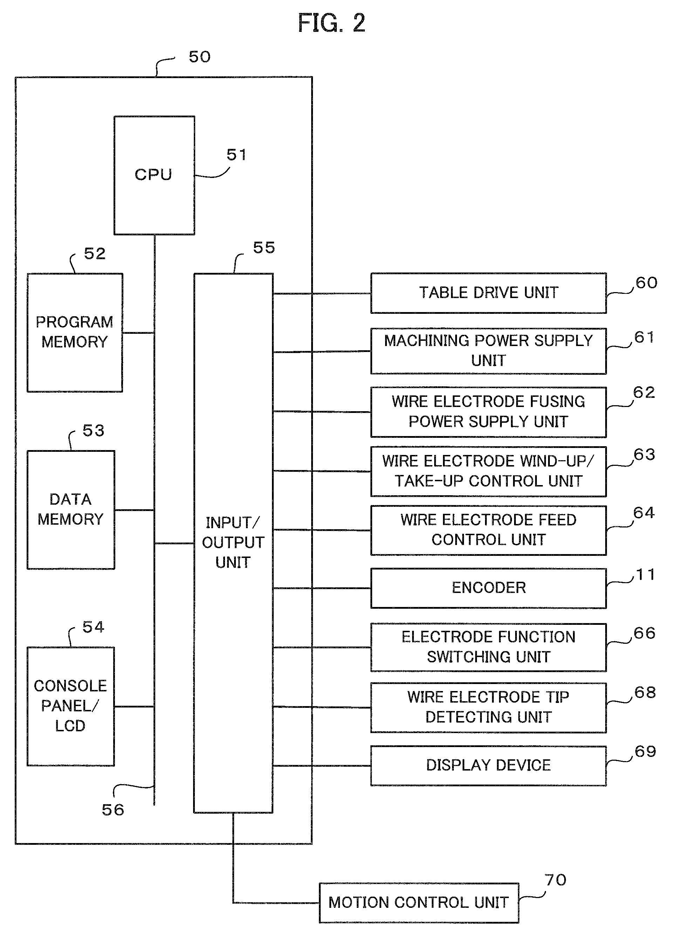

FIG. 2 shows a wire-cut electric discharge machine controller that also serves as an NC unit (numerical control unit) for positional control of the table surface 19.

As shown in FIG. 2, the wire-cut electric discharge machine controller 50 includes a central processing unit (referred to below as CPU) 51 made up of a microprocessor. A program memory 52, data memory 53, console panel 54 equipped with a liquid crystal display (LCD), and input/output unit 55 are connected to the CPU 51 via a bus 56.

In the program memory 52, various programs for controlling various components of the wire-cut electric discharge machine and the wire-cut electric discharge machine controller 50 itself are stored. A program (described later) for the wire break repairing process according to the present invention is also stored in the program memory 52. The data memory 53 stores position data associated with the machining programs, various setting data specifying other machining conditions, as well as the radius r (or first distance R) of the nozzle aperture of the upper nozzle 7a on the upper wire electrode guide 7, radius r (or first distance R) of the nozzle aperture of the lower nozzle 18a on the lower wire electrode guide 18, and the second distance R' which are used for practicing the present invention. The data memory 53 is also used as a buffer memory for temporarily storing data for various computing operations performed by the CPU 51.

To the input/output unit 55, a table drive unit 60, machining power supply unit 61, wire electrode fusing power supply unit 62, wire electrode wind-up/take-up control unit 63, wire electrode feed control unit 64, encoder 11, electrode function switching unit 66, wire electrode tip detecting unit 68, display device 69, and a motion control unit 70 controlling individual units in the wire-cut electric discharge machine are connected.

The table drive unit 60 and machining power supply unit 61 have well-known constructions and are controlled according to common schemes during machining operations. The wire electrode fusing power supply unit 62 supplies a necessary electric power to the first and second wire electrode fusing electrodes 13, 14b. The wire electrode wind-up/take-up control unit 63 drives a motor (not shown) that drives the wire electrode take-up roller 17 and the wind-up motor 8.

The wire electrode feed control unit 64 controls the driving of the brake motor 10 that drives the brake roller 4, the amount of rotation of which is detected by the encoder 11 as described above. The electrode function switching unit 66 switches the function of the second wire electrode fusing electrode 14b to either the wire electrode fusing means or the wire electrode tip detecting means 14a. A wire electrode tip detection signal from the electrode 14b serving as the wire electrode tip detecting means is input to the wire electrode tip detecting unit 68. The motion control unit 70 collectively represents the units that control the forward and backward movements of the second wire electrode fusing electrode 14b, the downward movement of the wire electrode feeding pipe structure 12 for automatic wire connection, and other motions.

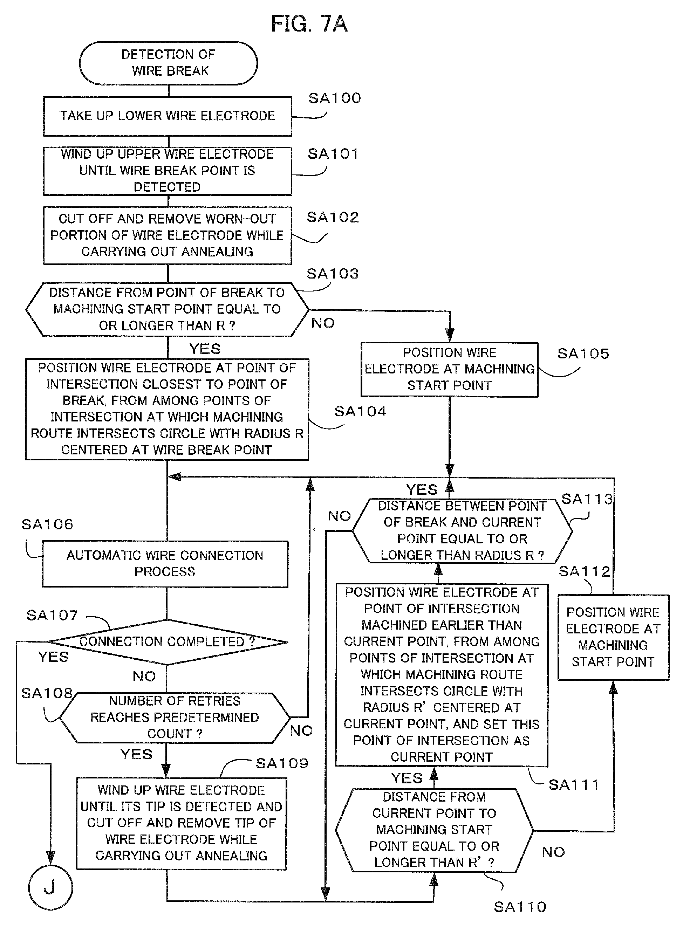

The CPU 51 sequentially detects feedback pulses output from the encoder 11 during normal running (during electric discharge machining) of the wire electrode 20. If the feedback pulses are not detected for at least a predetermined time length, the CPU 51 determines that the wire electrode 20 has broken at the electric discharge machining point and the wire electrode 20 is being advanced by the rotation of the wire electrode take-up roller 17 (in other words, the brake roller 4 has stopped rotating). The CPU 51 then starts a wire break repairing process as shown in the flowcharts in FIGs. 7A and 7B.

Upon detection of the break of the wire electrode 20, the CPU 51 issues stop commands to the table drive unit 60, machining power supply unit 61, and wire electrode wind-up/take-up control unit 63 to stop advancing each shaft, to stop supplying the machining power between the upper and lower machining electrodes 30a and 30b and the workpiece, and to stop driving the wire electrode take-up roller 17. The CPU 51 then drives the wire electrode take-up roller 17 for a preset time length to take up the portion of wire electrode 20 downstream of the electric discharge machining point at which the wire electrode 20 broke.

The value of the counter counting the feedback pulses from the encoder 11 is reset and the function of the electrode 14b is switched to the wire electrode tip detecting means 14a, and a drive command is issued to the wire electrode wind-up/take-up control unit 63 to start forward rotation of the supply reel 9 (i.e., rewinding of the wire electrode 20). The supply reel 9 is rotated in the forward direction (i.e., in the direction opposite to the dashed arrow in FIG. 1) until a tip detection signal is input from the wire electrode tip detecting unit 68 (i.e., until the upstream portion of the wire electrode 20 is rewound and its tip reaches the position of the second wire electrode fusing electrode 14b serving as the wire electrode tip detecting means).

The portion of the wire electrode 20 worn out by electric discharge is then removed on the basis of the rewound amount of the wire electrode 20 indicated by the counter value and various setting data. More specifically, a drive command is issued to the motion control unit 70 to move the grip 26 that is open at the standby position to a working position as shown in FIG. 1 by actuating the air cylinder 28 and then the brake motor 10 is driven. At the same time, a predetermined amount of wire electrode 20 is fed toward the machining area by controlling the position of the brake roller 4 on the basis of the feedback signals from the encoder 11, and the grip 26 is closed to catch and hold the wire electrode 20 that has been fed.

Thereafter, the CPU 51 switches the function of the second wire electrode fusing electrode 14b to the wire electrode fusing means and actuates the wire electrode fusing power supply unit 62 to fuse the wire electrode 20 at the point corresponding to the second wire electrode fusing electrode 14b by applying a current between the first and second wire electrode fusing electrodes 13 and 14b while carrying out annealing of the wire electrode 20. The CPU 51 then actuates the air cylinder 28 again to move the grip 26 holding the piece of wire electrode 20 that was cut off at the upper and lower ends to the standby position and then opens the grip 26 to discard the piece of the wire electrode 20. This operation is repeated to remove the portions of the wire electrode worn out by electric discharge machining.

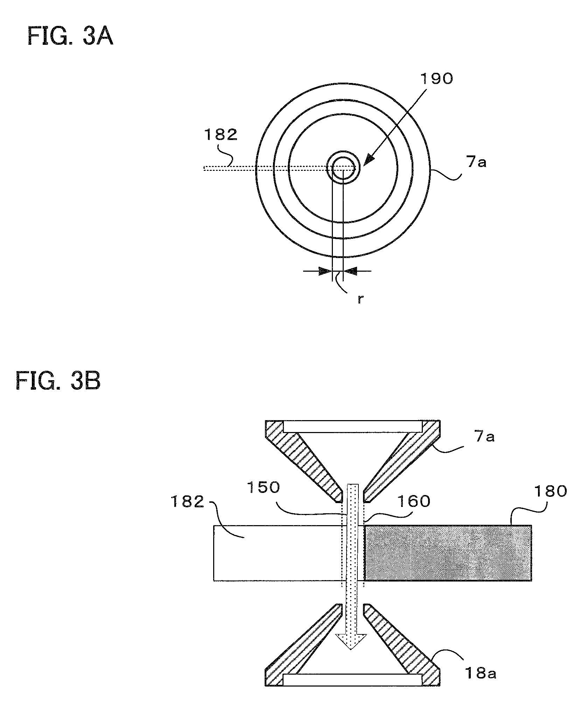

The upper nozzle 7a is attached to the upper wire electrode guide 7 and the lower nozzle 18a is attached to the lower wire electrode guide 18. The upper and lower nozzles 7a and 18a are shown in FIGs. 3A and 3B.

In an automatic wire connection process performed by the wire-cut electric discharge machine shown in FIG. 1, the wire electrode 20 is constrained by the flow of machining liquid ejected from the upper nozzle 7a on the upper wire electrode guide 7 and is guided through the machined groove 182 in the workpiece 180 into the lower wire electrode guide 18 through the lower nozzle 18a, or otherwise the wire electrode 20 is constrained by the flow of machining liquid absorbed through the lower wire electrode guide 18 and is guided toward the lower wire electrode guide 18.

The device configuration and process for automatic wire connection in the above wire-cut electric discharge machine described above are well known as disclosed in the aforementioned Japanese Patent Applications Laid-Open Nos. 2-145215 and 8-309622.

FIGs. 3A and 3B illustrate an automatic connection of the wire electrode performed at a point at least a distance corresponding to the radius r of the nozzle aperture backward from the point of break of the wire electrode. It is assumed here that the upper and lower nozzles 7a and 18a have nozzle apertures of radius r. Since the point of break 190 of the wire electrode is located outside the virtual cylinder 160 extending from the nozzle aperture of the upper nozzle 7a in the downstream direction of the wire electrode 20 (this cylinder 160 is concentric with the wire electrode and has a horizontal cross-sectional shape corresponding to the circle of the nozzle aperture), the flow of machining liquid 150 is undisturbed as shown in FIG. 3B, which increases the success rate of automatic wire connection.

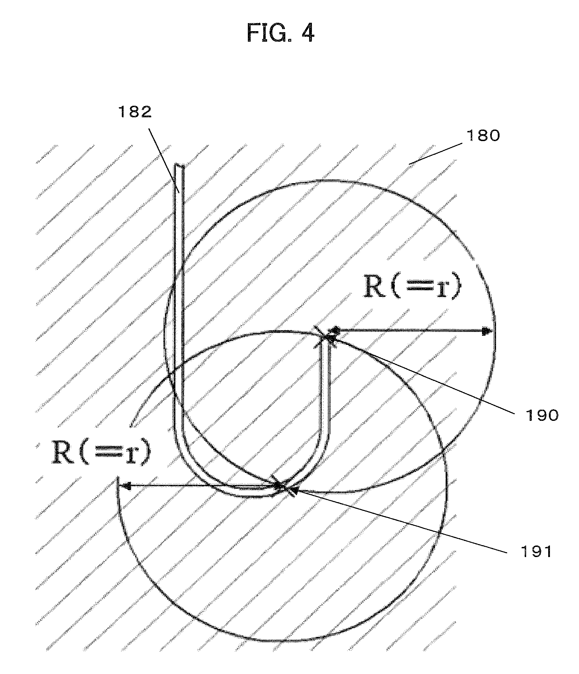

FIG. 4 illustrates an automatic wire connection performed at the point of intersection closest to the point of break of the wire electrode, from among the points of intersection at which the machining route intersects a circle with a first radius R (which is equal to the radius r of the nozzle aperture) centered at the point of break of the wire electrode, after the wire electrode is moved along the machining route to this point of intersection. This point of intersection (point of wire connection) closest to the point of break is referred to here as the first connection point 191. Since the distance between the point of break 190 of the wire electrode and the first connection point 191 is equal to the radius r of the nozzle aperture of the upper and lower nozzles 7a, 18a, the point of break 190 of the wire electrode is located outside the virtual cylinder 160 extending in the running direction of the wire electrode 20 (the cylinder 160 has a cross-sectional shape with a center and radius equal to the nozzle aperture of the upper nozzle 7a), so the flow of machining liquid 150 is undisturbed, resulting in a higher success rate of automatic wire connection.

The first radius R of the circle centered at the point of break of the wire electrode 20 needs to be equal to or larger than the radius r of the nozzle aperture of the nozzles 7a, 18a attached to the upper and lower wire electrode guides 7, 18, respectively. The upper limit of the first radius R can be defined to be one half the distance between the machining start point and the point of break 190 of the wire electrode. A larger radius R, however, would require a longer time for automatic wire connection, stopping machining for a longer time accordingly.

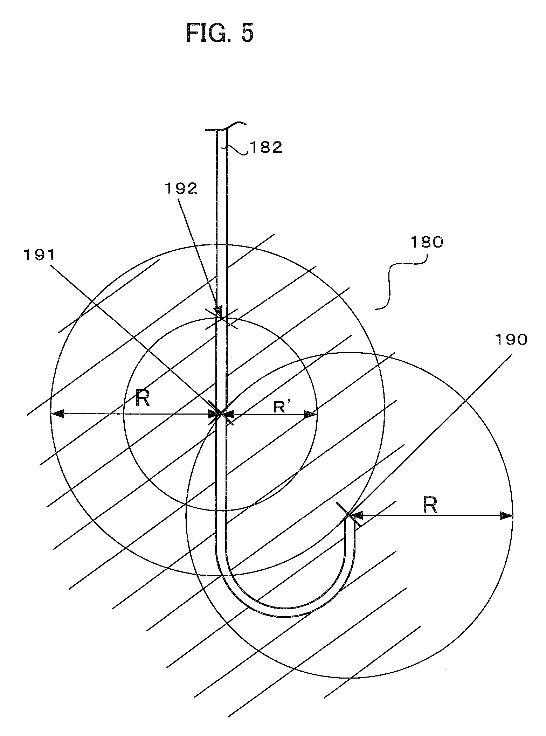

FIG. 5 illustrates the movement of the wire electrode to a point of intersection machined earlier than the current point, from among the points of intersection at which the machining route intersects a circle with a preset second radius R' centered at the current point, in a wire-cut electric discharge machine having a retry function.

If the automatic wire connection fails after being retried the preset number of times at the first connection point 191 which is the point of intersection closest to the point of break 190 of the wire electrode, from among the points of intersection at which the machining route intersects the circle with radius R centered at the point of break 190 of the wire electrode, the wire electrode is moved again to the second connection point 192 and automatic wire connection is retried again at the second connection point 192. If the success rate of automatic wire connection is low at the first connection point 191 due to machining chips or other foreign materials present on the travelling path (machined groove 182) of the wire electrode 20, the automatic connection of the wire electrode can be improved by retrying automatic wire connection at the second connection point 192 that is apart from the first connection point 191. The second connection point 192 is located at a point of intersection at which the machining route intersects the circle with the second radius R' centered at the first connection point 191. The second radius R' may be the same as or smaller or larger than the first radius R. It is noted that the second connection point 192 is a point machined earlier than the first connection point 191. If there are a plurality of second connection point candidates (i.e., if there are a plurality of points of intersection at which the machining route intersects the circle with the second radius R' centered at the first connection point 191), the second connection point may be set as appropriate, for example by selecting a point of intersection closer to the machining start point.

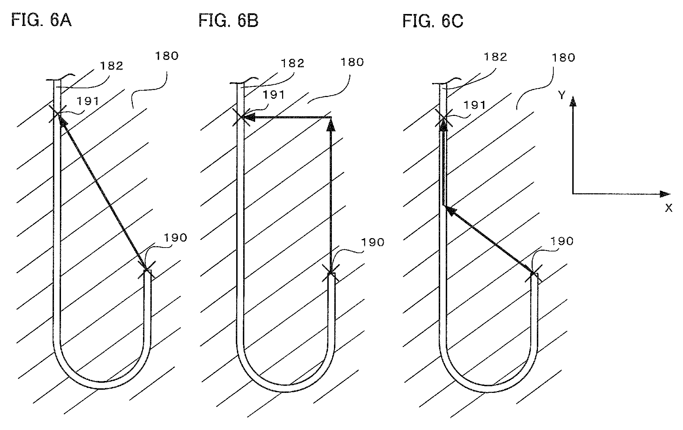

FIGs. 6A-6C illustrate different patterns for moving the wire electrode from the point of break 190 of the wire electrode to the first connection point (automatic wire connection point) 191. FIG. 6A shows a pattern taking the shortest distance. FIG. 6B shows another pattern in which the wire electrode is moved first in the Y-axis direction and then in the X-axis direction. FIG. 6C shows a still another pattern in which the wire electrode is moved first to a point before the first connection point 191 taking the shortest distance and then moved along the machining route to the first connection point 191. The patterns in FIGs. 6A and 6B move the wire electrode from the point of break 190 of the wire electrode to the first connection point 191 without retracing the machining route. In the pattern in FIG. 6C, the wire electrode retraces the machining route from the point immediately before the first connection point 191 to the first connection point 191.

FIGs. 7A and 7B show flowcharts illustrating an algorithm for a wire break repairing process performed by the wire break repairing device according to the present invention. These flowcharts illustrate an embodiment having a retry function. The process will now be described in the order of steps.
[Step SA100] Take up the lower wire electrode.
[Step SA101] Wind up the upper wire electrode until a point of break of the wire electrode is detected.
[Step SA102] Cut off and remove the worn-out portion of the wire electrode while carrying out annealing.
[Step SA103] Determine whether or not the distance from the point of break of the wire electrode to the machining start point is equal to or longer than the preset first distance R; if equal to or longer than the first distance R, proceed to step SA104; if not, proceed to step SA105. The machining start point is the hole at which the machining of the workpiece 180 is started (machining start hole).
[Step SA104] Position the wire electrode at the point of intersection closest to the point of break (i.e., most recently machined point), from among the points of intersection at which the machining route intersects a circle with radius R (first distance) centered at the point of break of the wire electrode. Points of intersection are determined as will be described below using an example. First, points of intersection are determined from the simultaneous equations made up of an equation representing the machining route in the block in which the wire electrode broke and an equation of the circle with radius R. If no point of intersection is found within this block, points of intersection are determined from the simultaneous equations made up of an equation representing the machining route in the previously machined block and the equation of the circle with radius R. If no point of intersection is found within this block, points of intersection are determined in the block immediately preceding the previously machined block. This operation is repeated until a point of intersection is found in any one of the machined blocks.
[Step SA105] Position the wire electrode at the machining start point and proceed to step SA106.
[Step SA106] Perform an automatic wire connection process.
[Step SA107] Determine whether the connection of wire electrode is completed or not; if completed, proceed to step SA114; if not, proceed to step SA108.
[Step SA108] Determine whether or not the number of retries reaches a predetermined count; if the predetermined count is reached, proceed to step SA109; if not, return to step SA106.
[Step SA109] Wind up the wire electrode until its tip is detected, and cut off and remove the tip while carrying out annealing. If the number of retries exceeds the predetermined count, it is assumed that the linearity of the wire electrode tip is impaired due to machining chips in the machined groove, so the tip of wire electrode is cut off and removed again while carrying out annealing of the wire electrode.
[Step SA110] Determine whether or not the distance from the current point to the machining start point is equal to or longer than the second distance R'; if equal to or longer than the preset second distance R', proceed to step SA111; if not, proceed to step SA112.
[Step SA111] Move and position the wire electrode to a point of intersection machined earlier than the current point, from among the points of intersection at which the machining route intersects the circle with radius R' (second distance) centered at the current point, and proceed to step SA113.
[Step SA112] Position the wire electrode at the machining start point, and proceed to step SA106.
[Step SA113] Determine whether or not the distance from the point of break of the wire electrode to the current point is equal to or longer than the radius R; if so, proceed to step SA106 (the "current point" becomes the wire connection point); if not, return to step SA110.
[Step SA114] Determine whether or not a discharge trace is set; if so, proceed to step SA115; if not, proceed to step SA116.
[Step SA115] Start a discharge trace.
[Step SA116] Start a dry retrace.
[Step SA117] Determine whether or not the point of break of the wire electrode is reached; if reached, resume machining.

In an alternative embodiment, in step SA109, instead of cutting off the tip of wire electrode while carrying out annealing, the wire electrode may be simply positioned at the point of intersection closest to the current point, from among the points of intersection at which the machining route intersects the circle with radius R'.

## Claims

1. A wire break repairing method for a wire-cut electric discharge machine,
wherein the wire-cut electric discharge machine has a function for automatically connecting a wire electrode (20) by constraining the wire electrode by a machining liquid (150) ejected from a nozzle aperture of a nozzle (7a) on an upper wire guide (7) and controls movable axes according to a machining program to machine a workpiece (180) along a machining route; the method **characterised by** comprising
upon breakage of the wire electrode (20)during electric discharge machining by the wire-cut electric discharge machine:
defining a circle with a first radius (R) centered at a point of break (190) of the wire electrode (20),
determining the points of intersection at which the machining route intersects the circle, selecting the most recently machined point (191) from among the determined points of intersection, and
automatically connecting the wire electrode (20) at selected point of intersection (191).

2. The wire break repairing method for the wire-cut electric discharge machine according to claim 1, wherein the first radius (R) is equal to or larger than the radius (r) of the nozzle aperture (7a).

3. The wire break repairing method for the wire-cut electric discharge machine according to claim 1, further comprising controlling the movable axes so as to move the wire electrode (20) from the point of break (190) of the wire electrode to the most recently machined point of intersection (191) by taking a shortest distance.

4. The wire break repairing method for the wire-cut electric discharge machine according to claim 3, further comprising moving the wire electrode (20) along a straight line from the point of break (190) of the wire electrode to the most recently machined point of intersection (191).

5. The wire break repairing method for the wire-cut electric discharge machine according to claim 1, further comprising, if a rectilinear distance from a machining start point to the point of break (190) of the wire electrode (20) is shorter than the first radius (R), automatically connecting the wire electrode at the machining start point.

6. The wire break repairing method for the wire-cut electric discharge machine according to claim 1, further comprising performing a retry operation by rewinding the wire electrode (20) by a preset length when a tip of the wire electrode touches the workpiece (180) or an obstacle and feeding the wire electrode again;
and, if a number of retry operations performed reaches a preset count for automatic wire connection, partially cutting off the tip of the wire electrode (20) and moving the wire electrode to a point of intersection (192) machined earlier than the current point (191), from among points of intersection at which the machining route intersects a circle with a second radius (R') centered at the current point (191), and retrying the automatic wire connection again at the point of intersection machined earlier (192).

7. The wire break repairing method for the wire-cut electric discharge machine according to claim 6, further comprising, if the number of retry operations reaches again a preset count for automatic wire connection, repeatedly retrying the automatic wire connection until the automatic wire connection succeeds, and, if the repeat count reaches a predetermined count before the automatic wire connection succeeds, moving the wire electrode (20) to the machining start point and performing the automatic wire connection at the machining start point.

8. The wire break repairing method for the wire-cut electric discharge machine according to claim 6, further comprising, if the straight-line distance from the machining start point to the current point (191) is shorter than the second radius (R'), retrying automatic wire connection at the machining start point.

9. A program which, when executed by a wire-cut electric discharge machine controller (50), causes a wire electric discharge machine to execute the method of any of claims 1 to 8.

10. A wire-cut electric discharge machine controller (50) including a program memory (52) having stored therein a program according to claim 9.

## Patentansprüche

1. Drahtbruchreparaturverfahren für eine Funkenerosions-Drahtschneidemaschine,
wobei die Funkenerosions-Drahtschneidemaschine eine Funktion zum automatischen Verbinden einer Drahtelektrode (20) durch Fixieren der Drahtelektrode mittels einer Bearbeitungsflüssigkeit (150), die aus einer Düsenöffnung einer Düse (7a) an einer oberen Drahtführung (7) ausgespritzt wird, hat und bewegliche Achsen gemäß einem Bearbeitungsprogramm steuert, um ein Werkstück (180) entlang einer Bearbeitungsroute maschinell zu bearbeiten; wobei das Verfahren **dadurch gekennzeichnet ist, dass** es - beim Brechen der Drahtelektrode (20) während der Funkenerosionsbearbeitung durch die Funkenerosions-Drahtschneidemaschine - Folgendes umfasst:
Definieren eines Kreises mit einem ersten Radius (R), dessen Mittelpunkt sich an einem Bruchpunkt (190) der Drahtelektrode (20) befindet,
Bestimmen der Schnittpunkte, an denen die Bearbeitungsroute die Kreise schneidet,
Auswählen des zuletzt bearbeiteten Punktes (191) aus den bestimmten Schnittpunkten, und
automatisches Verbinden der Drahtelektrode (20) an dem ausgewählten Schnittpunkt (191).

2. Drahtbruchreparaturverfahren für die Funkenerosions-Drahtschneidemaschine nach Anspruch 1, wobei der erste Radius (R) mindestens so groß ist wie der Radius (r) der Düsenöffnung (7a).

3. Drahtbruchreparaturverfahren für die Funkenerosions-Drahtschneidemaschine nach Anspruch 1, das des Weiteren umfasst, die beweglichen Achsen so zu steuern, dass die Drahtelektrode (20) um eine kürzeste Distanz von dem Bruchpunkt (190) der Drahtelektrode zu dem zuletzt bearbeiteten Schnittpunkt (191) bewegt wird.

4. Drahtbruchreparaturverfahren für die Funkenerosions-Drahtschneidemaschine nach Anspruch 3, das des Weiteren umfasst, die Drahtelektrode (20) entlang einer geraden Linie von dem Bruchpunkt (190) der Drahtelektrode zu dem zuletzt bearbeiteten Schnittpunkt (191) zu bewegen.

5. Drahtbruchreparaturverfahren für die Funkenerosions-Drahtschneidemaschine nach Anspruch 1, das des Weiteren umfasst, wenn eine geradlinige Distanz von einem Bearbeitungsstartpunkt zu dem Bruchpunkt (190) der Drahtelektrode (20) kürzer ist als der erste Radius (R), die Drahtelektrode automatisch an dem Bearbeitungsstartpunkt zu verbinden.

6. Drahtbruchreparaturverfahren für die Funkenerosions-Drahtschneidemaschine nach Anspruch 1, das des Weiteren umfasst, eine Neuversuchsoperation auszuführen, bei der die Drahtelektrode (20) um eine voreingestellte Länge erneut aufgewickelt wird, wenn eine Spitze der Drahtelektrode das Werkstück (180) oder ein Hindernis berührt, und die Drahtelektrode erneut zugeführt wird;
und wenn eine Anzahl von ausgeführten Neuversuchsoperationen einen voreingestellten Zählwert für die automatische Drahtverbindung erreicht, die Spitze der Drahtelektrode (20) teilweise abzuschneiden und die Drahtelektrode zu einem Schnittpunkt (192), der früher als der momentane Punkt (191) bearbeitet wurde, aus einer Reihe von Schnittpunkten, an denen die Bearbeitungsroute einen Kreis mit einem zweiten Radius (R') schneidet, dessen Mittelpunkt sich an dem momentanen Punkt (191) befindet, zu bewegen und die automatische Drahtverbindung an dem früher bearbeiteten Schnittpunkt (192) erneut zu versuchen.

7. Drahtbruchreparaturverfahren für die Funkenerosions-Drahtschneidemaschine nach Anspruch 6, das des Weiteren umfasst, wenn die Anzahl von Neuversuchsoperationen erneut einen voreingestellten Zählwert für die automatische Drahtverbindung erreicht, die automatische Drahtverbindung wiederholt neu zu versuchen, bis die automatische Drahtverbindung erfolgreich ist, und wenn der wiederholte Zählwert einen zuvor festgelegten Zählwert erreicht, bevor die automatische Drahtverbindung erfolgreich ist, die Drahtelektrode (20) zu dem Bearbeitungsstartpunkt zu bewegen und die automatische Drahtverbindung an dem Bearbeitungsstartpunkt auszuführen.

8. Drahtbruchreparaturverfahren für die Funkenerosions-Drahtschneidemaschine nach Anspruch 6, das des Weiteren umfasst, wenn die geradlinige Distanz von dem Bearbeitungsstartpunkt zu dem momentanen Punkt (191) kürzer ist als der zweite Radius (R'), die automatische Drahtverbindung an dem Bearbeitungsstartpunkt neu zu versuchen.

9. Programm, das, wenn es durch eine Steuereinheit (50) einer Funkenerosions-Drahtschneidemaschine ausgeführt wird, eine Funkenerosions-Drahtschneidemaschine veranlasst, das Verfahren nach einem der Ansprüche 1 bis 8 auszuführen.

10. Steuereinheit für eine Funkenerosions-Drahtschneidemaschine (50), die einen Programmspeicher (52) enthält, in dem ein Programm nach Anspruch 9 gespeichert ist.

## Revendications

1. Procédé de réparation de rupture de fil pour une machine d'étincelage à fil de coupe,
dans lequel la machine d'étincelage à fil de coupe a une fonction pour raccorder automatiquement un fil-électrode (20) en contraignant le fil-électrode par un liquide d'usinage (150) éjecté par une ouverture de buse d'une buse (7a) sur un guide de fil supérieur (7) et commande des axes mobiles selon un programme d'usinage pour usiner une pièce (180) le long d'une voie d'usinage ; le procédé étant **caractérisé en ce qu'**il comprend les étapes consistant à :
suite à la rupture du fil-électrode (20) pendant l'usinage par étincelage par la machine d'étincelage à fil de coupe :
définir un cercle avec un premier rayon (R) centré au niveau d'un point de rupture (190) du fil-électrode (20),
déterminer les points d'intersection auxquels la voie d'usinage coupe le cercle,
sélectionner le point usiné le plus récemment (191) parmi les points d'intersection déterminés, et
raccorder automatiquement le fil-électrode (20) au point d'intersection (191) sélectionné.

2. Procédé de réparation de rupture de fil pour une machine d'étincelage à fil de coupe selon la revendication 1, dans lequel le premier rayon (R) est égal ou supérieur au rayon (r) de l'ouverture de buse (7a).

3. Procédé de réparation de rupture de fil pour une machine d'étincelage à fil de coupe selon la revendication 1, comprenant en outre l'étape consistant à commander les axes mobiles afin de déplacer le fil-électrode (20) du point de rupture (190) du fil-électrode jusqu'au point d'intersection le plus récemment usiné (191) en prenant la distance la plus courte.

4. Procédé de réparation de rupture de fil pour une machine d'étincelage à fil de coupe selon la revendication 3, comprenant en outre l'étape consistant à déplacer le fil-électrode (20) le long d'une ligne droite du point de rupture (190) du fil-électrode jusqu'au point d'intersection le plus récemment usiné (191).

5. Procédé de réparation de rupture de fil pour une machine d'étincelage à fil de coupe selon la revendication 1, comprenant en outre, si une distance rectiligne d'un point de départ d'usinage au point de rupture (190) du fil-électrode (20) est plus courte que le premier rayon (R), raccorder automatiquement le fil-électrode au point de départ d'usinage.

6. Procédé de réparation de rupture de fil pour une machine d'étincelage à fil de coupe selon la revendication 1, comprenant en outre l'étape consistant à réaliser une opération de nouvel essai en rembobinant le fil-électrode (20) sur une longueur prédéterminée lorsqu'une pointe du fil-électrode touche la pièce (180) ou un obstacle et alimenter à nouveau le fil-électrode ;
et, si un certain nombre d'opérations de nouvel essai atteint un comptage prédéterminé pour le raccordement de fil automatique, couper partiellement la pointe du fil-électrode (20) et déplacer le fil-électrode jusqu'à un point d'intersection (192) usiné plus tôt que le point courant (191), parmi les points d'intersection auxquels la voie d'usinage coupe un cercle avec un second rayon (R') centré sur le point courant (191), et essayer à nouveau le raccordement de fil automatique au point d'intersection usiné plus tôt (192).

7. Procédé de réparation de rupture de fil pour une machine d'étincelage à fil de coupe selon la revendication 6, comprenant en outre, si le nombre d'opérations d'essai atteint à nouveau un comptage prédéterminé pour le raccordement de fil automatique, essayer à plusieurs reprises le raccordement de fil automatique jusqu'à ce que le raccordement de fil automatique réussisse, et si le comptage répété atteint un comptage prédéterminé avant que le raccordement de fil automatique ne réussisse, déplacer le fil-électrode (20) jusqu'au point de départ d'usinage et réaliser le raccordement de fil automatique au point de départ d'usinage.

8. Procédé de réparation de rupture de fil pour une machine d'étincelage à fil de coupe selon la revendication 6, comprenant en outre, si le distance en ligne droite depuis le point de départ d'usinage jusqu'au point courant (191) est plus courte que le second rayon (R'), essayer à nouveau le raccordement de fil automatique au point de départ d'usinage.

9. Programme qui, lorsqu'il est exécuté par un organe de commande (50) de machine d'étincelage à fil de coupe amène une machine d'étincelage à fil de coupe à exécuter le procédé selon l'une quelconque des revendications 1 à 8.

10. Organe de commande (50) de machine d'étincelage à fil de coupe comprenant une mémoire de programme (52) ayant, stocké à l'intérieur de cette dernière, un programme selon la revendication 9.
